# EUROPEAN PATENT APPLICATION

(11) **EP 4 418 376 A1**
(43) Date of publication of application: **21.08.2024**
(21) Application number: 22901671.2
(22) Date of filing: 24.11.2022
(51) Int. Cl.: H01M 8/1051, H01M 8/10

(54) **RADICAL SCAVENGER COMPOSITE, METHOD FOR PREPARING SAME, AND FUEL CELL COMPRISING SAME**

(30) Priority: 03.12.2021 KR 20210172353; 23.11.2022 KR 20220157928
(71) Applicant: Kolon Industries, Inc., Seoul 07793 (KR)
(72) Inventor: KIM, Jung Ho, Seoul 07793 (KR); KIM, Jun Young, Seoul 07793 (KR); SONG, Kah Young, Seoul 07793 (KR); KONG, Nak Won, Seoul 07793 (KR); LEE, Eun Su, Seoul 07793 (KR); KIM, Hyeong Su, Seoul 07793 (KR); LEE, Ju Sung, Seoul 07793 (KR); NAM, Kyoung Sik, Seoul 07793 (KR); PARK, Chan Mi, Seoul 07793 (KR)
(74) Representative: Ter Meer Steinmeister & Partner
(86) International application number: PCT/KR2022/018674
(87) International publication number: WO 2023/101313

(57) **Abstract**

The present invention relates to: a radical scavenger composite comprising carbon nanotubes elongated in the longitudinal direction, each of which has a closed cap structure at one end thereof, and radical scavenger particles positioned inside a cap of the closed cap structure; a method for preparing a radical scavenger composite, comprising a step of providing radical scavenger particles on the surface of a substrate and a step of growing carbon nanotubes on the surface of the radical scavenger particles; and a fuel cell.

## Description

### [TECHNICAL FIELD]

The present disclosure relates to an additive composite that can prevent chemical degradation of a polymer electrolyte membrane and a method for preparing the same, and a radical scavenger composite, which has the characteristics of preventing generation of cracking, deterioration of performance, and deterioration of durability due to improved stability, and long-term maintenance of additive performance due to prevention of loss of additives and the characteristics of improved performance and durability due to nanostructure; a preparation method thereof; and a fuel cell including the same.

### [BACKGROUND ART]

A fuel cell is a cell that directly converts chemical energy generated by oxidation of a fuel into electrical energy, and has been highlighted as a next-generation energy source due to its high energy efficiency and low emission of pollutants.

A fuel cell generally has a structure in which an anode and a cathode are formed on both sides of an electrolyte membrane interposed therebetween, and such a structure is referred to as a membrane-electrode assembly (MEA).

Fuel cells can be classified into alkaline electrolyte fuel cells, polymer electrolyte membrane fuel cells (PEMFC), *etc.,* depending on the type of electrolyte membrane, and among them, the polymer electrolyte membrane fuel cells, due to advantages, such as a low operating temperature of below 100°C, fast start-up and response characteristics, excellent durability, *etc.,* has been highlighted as a power supply for portables, vehicles, and household.

Representative examples of such polymer electrolyte fuel cell may include a proton exchange membrane fuel cell (PEMFC) that uses hydrogen gas as fuel, *etc.*

Summarizing the reactions occurring in the polymer electrolyte membrane fuel cell, first, when a fuel such as hydrogen gas is supplied to an oxidizing electrode, hydrogen ions (H⁺) and electrons (e⁻) are generated by the oxidation reaction of hydrogen at the oxidizing electrode. The hydrogen ions generated are transferred to a reducing electrode through the ion exchange membrane, and the electrons generated are transferred to the reducing electrode through an external circuit. Oxygen gas is supplied from the reducing electrode, and oxygen is combined with hydrogen ions (H⁺) and electrons (e⁻) to generate water by a reduction reaction of oxygen.

In a fuel cell, reactions at the anode and at the cathode are different from each other, and due to the difference in reactants and reaction by-products, one surface and the other surface of a polymer electrolyte membrane are exposed to different environments during the operation of a fuel cell. Additionally, a fuel cell is formed as a membrane-electrode assembly of a stacked structure by transferring electrode layers to both surfaces of a polymer electrolyte membrane, and has a structure in which a bipolar plate is stacked on its surface, and oxygen and fuel gas are injected through a flow path formed in the bipolar plate.

Oxygen radicals generated when a fuel cell operates is known to be a major cause of deterioration of a polymer electrolyte membrane. During the reduction reaction of oxygen at the reducing electrode, hydrogen peroxide (H₂O₂) is generated, and from this hydrogen peroxide, a hydrogen peroxide radical (H₂O₂) and/or a hydroxyl radical (·OH) may be generated. The thus-generated oxygen radicals cause deterioration of the ionomers, which are included in the polymer electrolyte membrane and substantially have the property of transferring hydrogen ions, and thus reduce the ion conductivity of the polymer electrolyte membrane, ultimately causing deterioration of performance of the fuel cell.

In order to remove the generated radicals, a method of adding a radical scavenger (*i.e*., a material that traps radicals) to a polymer electrolyte membrane or electrode layer so as to prevent deterioration of the polymer electrolyte membrane and subsequent deterioration of fuel cell performance, has been utilized.

As such, a material which traps radicals is a radical scavenger, and it functions to react with radicals and remove radicals before radicals generated in the electrodes deteriorate the polymer electrolyte membrane.

The radical scavenger is coated on the surface of the polymer electrolyte membrane or added to the electrode layer in a mixed form. The radical scavenger added in the form of a particle such as a metal particle or metal compound is eluted during the operation of a fuel cell. That is, since the amount of radical scavengers capable of removing radicals is reduced, radical removal cannot be properly performed as the driving time of the fuel cell increases, thereby resulting in rapid deterioration of performance of the fuel cell.

Korean Patent Application Publication No. 2020-0130179 discloses a technology for preventing performance deterioration of a fuel cell in which a radical scavenger having radical scavenger particles with a porous protective film on the surface disclosed therein is configured such that components such as metal ions formed after the radical scavenger traps radicals are not eluted from the protective film.

However, when the radical scavenger is prepared in the form of a composite with a protective film formed on the surface, additional processes and costs may be required to prepare the same: therefore, there is a need for the development of a technology that can prepare the composite in a simpler way.

Therefore, it is necessary to develop a method for preparing a radical scavenger composite having excellent efficiency of preparation and easy preparation while maintaining the radical trapping effect of the radical scavenger for a long period of time.

### [Prior Art Document]

(Patent Document 0001) Korea Patent No. 1282678
(Patent Document 0002) Korea Patent No. 2044875
(Patent Document 0003) Korea Patent Application Publication No. 10581099
(Patent Document 0004) Korean Patent Application Publication No. 2020-0130179

### [DETAILED DESCRIPTION OF INVENTION]

### [TECHNICAL PROBLEMS]

An object of the present disclosure is to provide a radical scavenger composite which is capable of stably functioning in a membrane-electrode assembly and improving performance and durability by preventing generation of cracking, loss of a radical scavenger, *etc.* and a preparation method thereof.

Additionally, an object of the present disclosure is to provide a radical scavenger composite with improved physical and chemical stability compared to conventional radical scavengers.

An object of the present disclosure is to provide a method for preparing a radical scavenger composite with improved stability that can be prepared simply and inexpensively.

### [TECHNICAL SOLUTION]

According to one aspect of the present disclosure, there is provided a radical scavenger composite which includes carbon nanotubes having a closed cap structure at one end thereof and radical scavenger particles positioned inside the cap of the closed cap structure.

The carbon nanotubes may be single-walled carbon nanotubes or multi-walled carbon nanotubes.

The carbon nanotube may have a length of 0.3 µm to 10 µm and a diameter of 100 nm or less.

The radical scavenger particles may have a diameter of 3 nm to 100 nm.

The radical scavenger particles positioned inside the cap may be contained 55 wt% to 95 wt% based on the total weight of the total radical scavenger composite particles.

The radical scavenger composite may be one which is used for an electrode in a membrane electrode assembly for a fuel cell.

According to another aspect of the present disclosure, there is provided a method for preparing a radical scavenger composite, which includes providing radical scavenger particles on the surface of a substrate; and growing carbon nanotubes (CNTs) on the surface of the radical scavenger particles.

The step of providing radical scavenger particles on the surface of a substrate may include applying a solution containing the radical scavenger particles on the surface of the substrate.

The step of growing the carbon nanotubes on the surface of the radical scavenger particle may be performed by a tip growth method.

The step of growing carbon nanotubes on the surface of the radical scavenger particles may include subjecting the substrate provided with the radical scavenger particles to a first heat treatment; and subjecting the substrate, which has been subjected to the first heat treatment, to a second heat treatment at a temperature higher than the first heat treatment temperature while supplying a carbon nanotube precursor thereto.

The first heat treatment may be performed at a temperature of 200°C to 400°C in an inert gas atmosphere, and the second heat treatment may be performed at a temperature of 500°C to 1, 100°C in a mixed gas atmosphere of hydrogen and an inert gas.

The carbon nanotube precursor may be at least one selected from the group consisting of ethylene, acetylene, methylacetylene, vinylacetylene, alcohol, phthalocyanine, porphyrin, melamine, cyanamide, and dicyandiamide.

The carbon nanotube precursor may be at least one selected from the group consisting of ethylene, acetylene, methylacetylene, vinylacetylene, and alcohol, and may be provided to a second heat treatment in a gaseous state.

The carbon nanotube precursor may be at least one selected from the group consisting of phthalocyanine, porphyrin, melamine, cyanamide, and dicyandiamide, and the carbon nanotube precursor may be provided to a zone where the substrate is positioned for the second heat treatment by heating and vaporizing in a second zone spaced apart from the zone where the substrate is positioned.

The substrate may be any one selected from the group consisting of a copper (Cu) substrate, an iron (Fe) substrate, a nickel (Ni) substrate, and a silicon (Si) substrate.

According to another aspect of the present disclosure, a membrane-electrode assembly including the above-described radical scavenger composite may be provided.

According to another aspect of the present disclosure, a fuel cell including the above-described membrane-electrode assembly may be provided.

### [EFFECT OF INVENTION]

The radical scavenger composite according to the present disclosure can prevent damage to the radical scavenger from external physical and chemical factors, and at the same time, it does not affect the radical scavenger's radical trapping effect, thus having an improved radical trapping effect.

The membrane-electrode assembly and the fuel cell including the radical scavenger composite according to the present disclosure has improved chemical durability.

The present disclosure can prepare a radical scavenger composite by a simple method, and thus has an effect of improving chemical durability without reducing preparation efficiency, compared to the case where the radical scavenger is used as-is.

### [BRIEF DESCRIPTION OF THE DRAWING]

FIG. 1 is a vertical cross-sectional view of a membrane-electrode assembly;
FIG. 2 is a schematic diagram showing the overall configuration of a fuel cell according to an embodiment of the present disclosure;
FIG. 3 is a schematic diagram showing the preparation rocess of the radical scavenger composite according to the present disclosure;
FIG. 4 is a transmission electron microscope (TEM) image of the radical scavenger composite prepared according to the present disclosure.
FIG. 5 is a scanning electron microscope (SEM) image of an electrode including a radical scavenger composite prepared according to the present disclosure.
FIG. 6 is an evaluation result of chemical durability of membrane-electrode assemblies prepared using a radical scavenger through Examples and Comparative Examples of the present disclosure.
FIG. 7 is an evaluation result of performance of a membrane-electrode assemblies prepared using a radical scavenger through Examples and Comparative Examples of the present disclosure.

### [BEST MODE FOR CARRYING OUT THE INVENTION]

Hereinafter, each constitution of the present disclosure will be described in more detail so that those skilled in the art can easily practice the same, but this is only one embodiment, and the scope of rights of the present disclosure is not limited by the following description.

"Preferred" or "preferably" as used herein refers to embodiments of the present disclosure that have particular advantages under particular conditions. However, other embodiments may also be preferred under the same or different conditions. Additionally, the presence of one or more preferred embodiments does not imply that other embodiments are not useful nor does it exclude other embodiments from being within the scope of the present disclosure.

As used herein, the term "including/comprising" is used when listing materials, compositions, devices, and methods useful in the present disclosure and is not limited to the embodiments listed.

The present disclosure relates to a method for preparing a radical scavenger composite including radical scavenger particles and carbon nano tubes (CNTs) surrounding the surface of the radical scavenger particles.

Carbon nanotubes are porous carbon materials which serve to allow radicals generated during battery operation to directly contact and react with radical scavenger particles, while preventing the radical scavenger particles from being physically and chemically damaged within the membrane-electrode assembly.

Specifically, the method for preparing a radical scavenger composite according to the present disclosure includes a step of providing radical scavenger particles on the surface of a substrate, and growing the carbon nanotubes (CNTs) on the surface of the radical scavenger particles.

The step of providing of the radical scavenger particles on the surface of the substrate may include a step of applying a solution containing the radical scavenger particles on the surface of the substrate. Specifically, the step may include a step of forming seeds for radical scavenger particles and a step of applying a solution containing the seeds on the surface of the substrate. The seeds may become radical scavenger particles in a subsequent heat treatment process.

After dispersing the radical scavenger particles on the surface of the substrate, carbon nanotubes grow into carbon nanotubes with a closed structure on the surface of the radical scavenger particles.

The composite is formed in such a form where radical scavenger particles are positioned within the carbon nanotube with a closed structure.

The step of growing the carbon nanotubes is not particularly limited in any way and may be implemented in various ways, but it is preferable that the step of growing the carbon nanotubes on the surface of the radical scavenger particles be performed by a tip growth method.

When the carbon nanotubes grow by this tip growth method, the radical scavenger particles grow in the form of a composite positioned at the closed cap portion of the carbon nanotubes.

That is, the carbon nanotubes have a closed cap structure at one end thereof, and the radical scavenger composite has a structure in which the radical scavenger particles are positioned in the cap portion of the closed cap structure of the carbon nanotubes, and the carbon nanotubes are grown below the same.

Each step in the method for preparing the radical scavenger composite may be described in more detail as follows.

The step of providing of the radical scavenger particles on the surface of the substrate may include a step of applying a solution containing the radical scavenger particles on the surface of the substrate.

The application of the solution may be performed by an application method by a solution process such as spray application, spin application, and inkjet printing application.

The solution containing the radical scavenger particles may include at least one solvent selected from water, alcohol, hexane, dimethylacetamide, dimethylsulfoxide, dimethylformamide, methylpyrrolidine, and a mixed solvent thereof.

Additionally, the solution containing the radical scavenger particles may further contain an auxiliary additive such as urea. The urea can easily form a seed from the precursor of the radical scavenger particle and enable carbons to be capped on the surface of the radical scavenger particles.

The step of growing carbon nanotubes on the surface of the radical scavenger particles may include, more specifically, a step of subjecting the substrate provided with the radical scavenger particles on the surface to a first heat treatment (hereinafter, also referred to as a first heat treatment); and subjecting the substrate, which has been subjected to the first heat treatment, to a second heat treatment at a temperature higher than that of the first heat treatment temperature while supplying a carbon nanotube precursor (hereinafter, also referred to as a second heat treatment).

The first heat treatment may be performed at a temperature of 200°C to 400°C in an inert gas atmosphere, for example, a nitrogen atmosphere. The first heat treatment may be performed for 1 to 4 hours. Additionally, the second heat treatment may be performed at a temperature of 500°C to 1100°C in a mixed gas atmosphere of hydrogen and an inert gas, for example, a hydrogen/nitrogen mixed gas atmosphere. The second heat treatment may be performed for 1 to 20 minutes.

Preferably, the first heat treatment may be performed at a temperature of 250°C to 350°C for 1.5 to 3.5 hours, and the second heat treatment may be performed at a temperature of 750°C to 1,050°C for 2 to 15 minutes. When the first heat treatment temperature and the second heat treatment temperature are lower than the above temperatures, there may be problems in that capping and growing of carbon nanotubes may not work well or the density and diameter of carbon nanotubes may decrease, whereas when the first heat treatment temperature and the second heat treatment temperature are higher than the above temperatures, there may be problems in that urea may not be capped with carbons or carbon nanotubes may grow excessively.

Additionally, when the heat treatment is performed for a time shorter than the above time, there may be a problem in that capping and growing of carbon nanotubes may not work well, whereas when the heat treatment is performed for a time longer than the above time, there may be a problem in that carbon nanotubes may grow excessively.

The step of growing carbon nanotubes, including the first heat treatment and the second heat treatment, may be performed in a tube-shaped furnace. If necessary, a furnace having two heat treatment zones may be used to heat and vaporize the carbon nanotube precursor, which will be described later. For example, a carbon nanotube precursor may be disposed at the front end of the furnace, and the substrate, in which radical scavenger particles are dispersed on the surface thereof, may be disposed at the rear end of the furnace, and thereafter, a first heat treatment may be performed at the rear end, and the carbon nanotube precursor may be heated, vaporized, and flowed at the front end and thereby carbon nanotubes may be allowed to grow by a second heat treatment on the radical scavenger particles on the surface of the substrate at the rear end of the furnace. That is, carbon nanotubes may be grown by the deposition method.

The carbon nanotube precursor is not particularly limited and may be at least one selected from the group consisting of a carbon precursor or a carbon/nitrogen precursor, for example, ethylene, acetylene, methylacetylene, vinylacetylene, alcohol, phthalocyanine, porphyrin, melamine, cyanamide, and dicyandiamide.

In one embodiment, the carbon nanotube precursor may be at least one selected from the group consisting of ethylene, acetylene, methylacetylene, vinylacetylene, and alcohol, and may be provided to the second heat treatment in a gaseous state.

In one embodiment, the carbon nanotube precursor may be at least one selected from the group consisting of phthalocyanine, porphyrin, melamine, cyanamide, and dicyandiamide, and the carbon nanotube precursor may be provided, for the second heat treatment, to the zone where the substrate is positioned, by being heated and vaporized in a second zone spaced apart from the zone where the substrate is positioned.

The carbon nanotubes constituting the radical scavenger composite may be any of single-walled carbon nanotubes and multi-walled carbon nanotubes, and the composite to be added to one membrane-electrode assembly does not necessarily have to be a composite consisting of the same type of carbon nanotubes, and it may be in a mixed form.

In the radical scavenger composite, the length of the carbon nanotube may be 0.3 µm to 10 µm. Preferably, it may be 0.4 µm to 5 µm, and most preferably, it is preferable that the carbon nanotube be prepared to have a length of 0.5 µm to 3 µm.

When the length of the carbon nanotube is longer than the above length, there may be a problem in that dispersibility may be deteriorated when the radical scavenger composite is added to the polymer electrolyte membrane in the membrane-electrode assembly or the catalyst layer of the electrode, and the effect of improving performance and durability may be inhibited., It is preferable to be configured with a length within the above range, whereas when it is shorter than the above length, the radical scavenger particles may not be sufficiently protected, and thus, there may be problems in that the effects of improving stability and preventing deterioration of performance in constituting the composite may be insignificant and the role as a structure may not be fulfilled thereby providing no effect of improving performance and durability.

Meanwhile, in the present disclosure, the substrate may be any one selected from the group consisting of a copper (Cu) substrate, an iron (Fe) substrate, a nickel (Ni) substrate, and a silicon (Si) substrate. Preferably, copper and nickel substrates may be used. More preferably, a copper substrate may be used.

When other substrates are used, there may be a problem in that carbon nanotubes do not selectively grow on the surface of the radical scavenger particles but grow randomly; therefore, it is preferable that a copper substrate be used as much as possible.

In the present disclosure, the radical scavenger particles may be used without particular limitation as long as they are additives or particles having radical scavenging ability, and any material may be used as a composition of the composite in the present disclosure. For example, the radical scavenger particle may be any one or more selected from the group consisting of transition metals, precious metals, ions thereof, salts thereof, oxides thereof, nitrides thereof, and complexes thereof.

The transition metal may be cerium (Ce), manganese (Mn), tungsten (W), cobalt (Co), vanadium (V), nickel (Ni), chromium (Cr), zirconium (Zr), yttrium (Y), iridium (Ir), iron (Fe), titanium (Ti), molybdenum (Mo), lanthanum (La), or neodymium (Nd), but is not limited thereto.

The precious metal may be silver (Au), platinum (Pt), ruthenium (Ru), palladium (Pd), or rhodium (Rh), but is not limited thereto.

The transition metal or precious metal salt may be carbonate, acetate, chloride, fluoride, sulfate, phosphate, nitrate, tungstate, hydroxide, ammonium acetate, ammonium sulfate, or acetylacetonate salt, but this is an example and the transition metal or precious metal salt is not limited thereto, but various radical scavenger particles may be used.

Meanwhile, the radical scavenger particle may have a diameter of 3 nm to 100 nm, preferably, 4 nm to 80 nm, and most preferably, 5 nm to 60 nm.

When the diameter is smaller than the above diameter, there may be a problem in that the radical scavenger particles may not be positioned inside the carbon nanotubes, whereas when the diameter is larger than the above diameter, there may be a problem in that the carbon nanotubes may not completely cover the radical scavenger particles, and the radical scavenger particles may not be positioned on the side of the capped closed cap structure of the carbon nanotubes.

The amount of radical scavenger particles positioned inside the cap may be 55 wt% to 95 wt%, and specifically 60 wt% to 90 wt% based on the total weight of all radical scavenger composite particles.

The effect of improving the performance and lifetime of the fuel cell according to the present disclosure may be effectively exhibited by setting the amount of the radical scavenger particles positioned in the cap of the carbon nanotube to the above range.

The porous protective film has advantages in that it can prevent the elution of the radical scavenger particles by reducing the mobility of the radical scavenger particles and can improve stability by inhibiting the reaction with reactive species other than radicals.

In the present disclosure, the radical scavenger composite may have a diameter, in the final state of the carbon nanotube, of 110 nm or less, for example, 4 nm to 110 nm, preferably 5 nm to 90 nm, and most preferably from 6 nm to 70 nm.

When the diameter of the carbon nanotube is larger than the above diameter, there may be a problem in that radical scavenger particles may be released into the pores of the carbon nanotube. However, since the diameter of the carbon nanotube is determined according to the size of the radical scavenger, the lower limit of the diameter is not particularly limited.

As such, the radical scavenger prepared according to the above-described method for preparing the radical scavenger composite prevents deterioration of the polymer electrolyte membrane and the ionomer binder, and thereby prevents performance deterioration of the fuel cell, and can maintain radical trapping performance without elution, thereby having the effect of preventing deterioration of performance and lifetime of the fuel cell.

Additionally, the above-described radical scavenger composite consists of carbon nanotubes and thus functions as a structure in the electrodes thereby having the effect of improving performance and durability.

Hereinafter, the present disclosure will be described in more detail with reference to the drawings.

However, this is only one example for understanding of the present disclosure, and the scope of the present disclosure is not limited thereto.

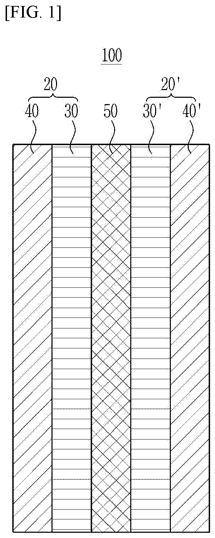

FIG. 1 is a schematic cross-sectional view of the membrane-electrode assembly according to the present disclosure. Referring to FIG. 1, the membrane-electrode assembly 100 includes the polymer electrolyte membrane 50 and electrodes (20, 20') disposed on both surfaces of the polymer electrolyte membrane 50, respectively. The electrodes (20, 20') include electrode substrates (40, 40') and catalyst layers (30, 30') formed on surfaces of the electrode substrates (40, 40'), and the electrode substrates (40, 40') may further include a microporous layer (not shown) containing conductive fine particles (*e.g*., carbon powder, carbon black, *etc*.) so as to facilitate diffusion of materials between the catalyst layers (30, 30') and the electrode substrates (40, 40').

In the membrane-electrode assembly 100, the electrode 20, which is disposed on one surface of the polymer electrolyte membrane 50 and causes an oxidation reaction that generates hydrogen ions and electrons from the fuel delivered to the catalyst layer 30 through the electrode substrate 40, is called an anode electrode. The electrode 20', which is disposed on the other side of the polymer electrolyte membrane 50 and causes a reduction reaction that generates water from hydrogen ions supplied through the polymer electrolyte membrane 50 and the oxidizing agent delivered to the catalyst layer 30' through the electrode substrate 40', is called a cathode electrode.

As the electrode substrate (40, 40'), a porous conductive substrate may be used so that hydrogen or oxygen can be smoothly supplied. Representative examples thereof may include carbon paper, carbon cloth, carbon felt, or metal cloth (a porous film consisting of a fibrous metal cloth or a metal film formed on the surface of a cloth formed of polymer fibers), but is not limited thereto. In addition, as the electrode substrates (40, 40'), it is preferable to use those subjected to repellency treatment with a fluorine-based resin so as to prevent the decrease of diffusion efficiency of reactants due to the water generated during the operation of a fuel cell.

As the fluorine-based resin include polytetrafluoroethylene, polyvinylidene fluoride, polyhexafluoropropylene, polyperfluoroalkylvinyl ether, polyperfluorosulfonylfluoride alkoxyvinyl ether, fluorinated ethylene propylene, polychlorotrifluoroethylene, or a copolymer thereof may be used.

The fuel cell according to an embodiment of the present disclosure includes a membrane-electrode assembly and may be, for example, a fuel cell using hydrogen gas as a fuel.

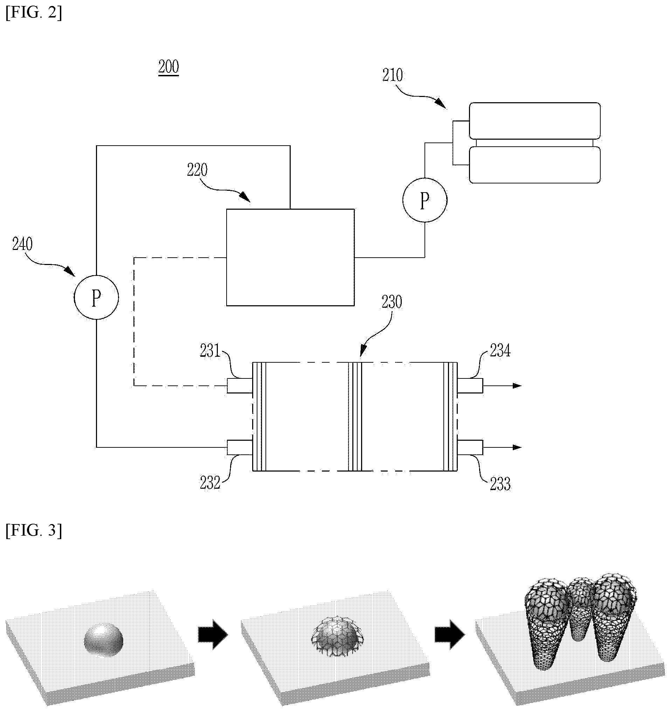

FIG. 2 is a schematic diagram showing the overall configuration of a fuel cell according to an embodiment of the present disclosure.

Referring to FIG. 2, the fuel cell 200 according to the present disclosure includes a fuel supply unit 210, which supplies a mixed fuel in which fuel and water are mixed; a reforming unit 220, which reforms the mixed fuel to generate reformed gas containing hydrogen gas; a stack 230, in which the reformed gas containing hydrogen gas supplied from the reforming unit 220 causes an electrochemical reaction with an oxidizing agent to generate electrical energy; and an oxidizing agent supply unit 240, which supplies the oxidizing agent to the reforming unit 220 and the stack 230.

The stack 230 is provided with a plurality of unit cells which generate electrical energy by inducing an oxidation/reduction reaction between the reformed gas including hydrogen gas supplied from the reforming unit 220 and the oxidizing agent supplied from the oxidizing agent supplying unit 240.

Each unit cell, which refers to a unit cell that generates electricity, includes the membrane-electrode assembly for oxidizing/reducing the reformed gas containing hydrogen gas and oxygen in the oxidizing agent, and a separator (also called a bipolar plate, hereinafter referred to as "separator") for supplying a reformed gas containing hydrogen gas and the oxidizing agent to the membrane-electrode assembly. The separators are disposed on both sides of the membrane-electrode assembly with the membrane-electrode assembly placed at the center. In particular, the separators respectively located at the outermost side of the stack are also particularly called end plates.

Among the separators, the end plate is provided with a pipe-shaped first supply pipe 231 for injecting the reformed gas including hydrogen gas supplied from the reforming unit 220; and a pipe-shaped second supply pipe 232 for injecting oxygen gas; and the other end plate is provided with a first discharge pipe 233 for discharging reformed gas containing hydrogen gas, that is finally unreacted and remains in a plurality of unit cells, to the outside; and a second discharge pipe 234 for discharging the oxidizing agent, that is finally unreacted and remains in the unit cell, to the outside.

FIG. 3 is a schematic diagram showing the preparation process of the radical scavenger composite according to the present disclosure.

First, after dispersing radical scavenger particles on a copper substrate, carbon nanotubes having a closed cap structure in a height direction based on the copper substrate are grown on the surface of the radical scavenger particles.

The tip growth method gradually elongates the carbon nanotubes, and in particular, the radical scavenger particles grow in a state positioned in the cap portion of the closed cap structure, and finally, after the carbon nanotube growth is completed, it is obtained as an independent composite separated from the copper substrate by scraping with a knife or applying ultrasonic waves in water.

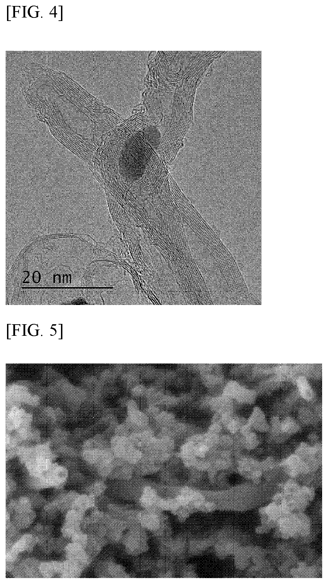

FIG. 4 is a transmission electron microscope (TEM) image of the radical scavenger composite prepared according to the present disclosure. As can be seen in FIG. 4, the composite sequentially prepared according to the process of FIG. 3 is prepared in the form of a composite in which radical scavenger particles are positioned in the cap portion of the closed cap structure.

FIG. 5 is a scanning electron microscope (SEM) image of an electrode prepared using a radical scavenger composite prepared according to the present disclosure. It can be seen from FIG. 5 that a radical scavenger composite in the form of a carbon nanotube is observed in the electrode.

### [MODE FOR CARRYING OUT THE INVENTION]

Hereinafter, it will be described in more detail based on embodiments of the present disclosure, but this is only an exemplary description for understanding the present disclosure, and the scope of the present disclosure is not limited or restricted to the following embodiments.

### [Example]

1.0 g of urea was dissolved in a water-alcohol mixture. After adding 1 g of Ce(NO₂)₃·6H₂O to the mixed solution, the mixture was stirred at 100°C for 3 hours to form CeOx seeds. The formed solution was spray-coated on a copper substrate and then dried. The copper substrate coated with the CeOx seed was placed into a tube-shaped furnace.

The furnace was subjected to heat treatment at 300°C for 2 hours in a nitrogen atmosphere.

In particular, the resultant was subjected to heat treatment at 1,000°C for 10 minutes in a mixed gas atmosphere of C₂H₄ and 5% H₂/N₂.

In a state where the length of the carbon nanotubes has grown to 3 µm, the carbon nanotubes were scraped with a knife (a process of separating the composite from the substrate) to obtain the composite. In particular, the carbon nanotubes of the composite were formed of multi-walled carbon nanotubes, and the diameter of the composite was about 20 nm. A closed cap structure was observed at one end of each of the carbon nanotubes, and the ratio of radical scavenger particles positioned in the cap of the cap structure was about 60 wt% to 90wt%.

### [Comparative Example 1]

According to the contents disclosed in Prior Document 1 (Korean Patent No. 1282678), carbon nanofibers in which radical scavengers were supported were prepared, and carbon nanofibers, in which 10 nm radical scavengers were supported in an amount of 30% to carbon nanofibers having a length of 10 µm and a diameter of 30 nm, were obtained.

### [Comparative Example 2]

A radical scavenger having a porous carbon coating layer of Prior Document 3 (Korean Patent Application Publication No. 10-2017-0127250) was prepared as follows: a composition for coating a carbon precursor was prepared by adding dopamine to a Tris-HCl buffer solvent, and the catalyst particles capable of decomposing CeO₂ (*i.e.*, a superoxide) or radicals were added to the composition for coating a carbon precursor. In particular, the composition for coating a carbon precursor included 0.3 parts by weight of the carbon precursor based on 100 parts by weight of the catalyst particles. The composition for coating a carbon precursor to which the catalyst particles were added was stirred at 250 rpm at 25°C for 12 hours, the carbon precursor was stabilized at 250°C and in a nitrogen atmosphere, and the carbon precursor was carbonized at 700°C and in a nitrogen atmosphere, and as a result, a radical decomposition catalyst, in which a porous carbon coating layer was formed on the surface of the catalyst particles, was prepared.

### [Comparative Example 3]

A radical scavenger composite was prepared in the same manner as in Example, except that the step of heating the furnace at 300°C for 2 hours in a nitrogen atmosphere was omitted. In the prepared radical scavenger composite, a closed cap structure was not observed at one end of the carbon nanotube, and the ratio of the radical scavenger particles positioned at one end was about 5 wt% to 35 wt%.

### [Experimental Method]

### [Experimental Example 1: Evaluation of chemical durability of membrane-electrode assembly]

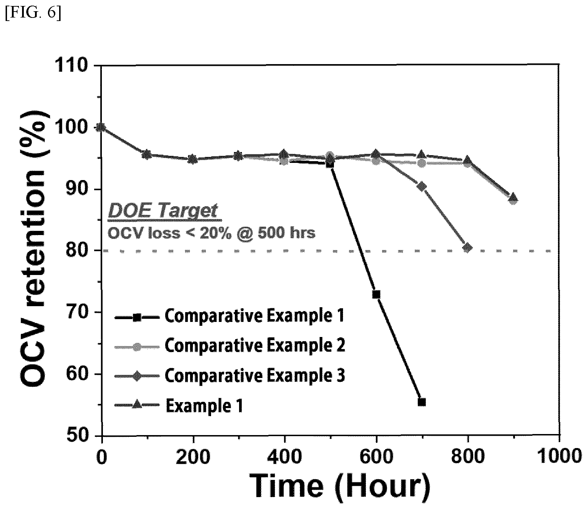

A membrane-electrode assembly was prepared using the radical scavenger prepared according to the Comparative Examples and Example. Three membrane-electrode assemblies were prepared under the same conditions and methods, but the radical scavenger of Comparative Example 2 was bulky, and thus the substantial amount of the radical scavenger added was larger than those of the membrane-electrode assembly prepared using Comparative Example 1 and Example. The chemical durability of the membrane-electrode assemblies was evaluated based on the durability evaluation protocol of the US Department of Energy (DOE). Specifically, in order to evaluate the chemical durability of the membrane-electrode assemblies, voltage retention was respectively measured while performing the OCV hold method, and the measured values are shown in FIG. 6. It can be seen from FIG. 6 that the voltage was decreased rapidly after 500 hours in the case of Comparative Example 1, whereas the voltage was stably maintained even after 800 hours in the case of using the radical scavenger of Example 1 of the present disclosure.

### [Experimental Example 2: Evaluation of performance of membrane-electrode assemblies]

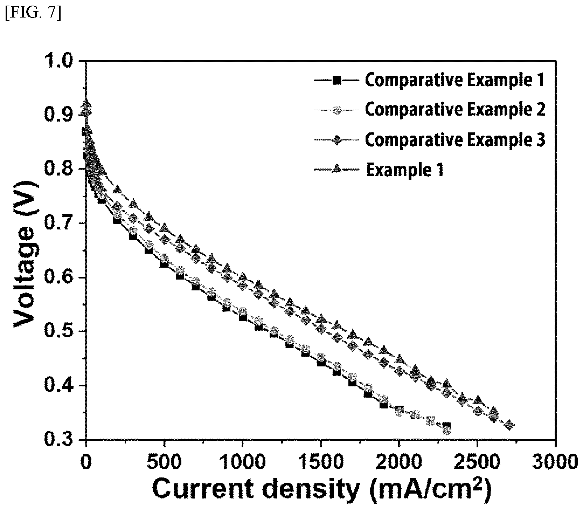

After preparing the membrane-electrode assemblies using the radical scavengers prepared according to the Comparative Examples and Example, the evaluation of performance was performed on the membrane-electrode assemblies at 65°C, 50/50 RH, atmospheric pressure conditions, and the results are shown in FIG. 7. In the case of the embodiment including the radical scavenger inside the carbon nanotubes from FIG. 7, it can be seen that there was no deterioration of performance due to increased stability of the radical scavenger compared to Comparative Example 1 in which the radical scavenger was dissolved during the fuel cell operation and inhibited the activity of the fuel cell catalyst, and showed improved performance by the increase of conductivity and the improvement in stability of the catalyst layer due to the structural characteristics of the carbon nanotubes compared to Comparative Example 2.

## Claims

1. A radical scavenger composite comprising:
carbon nanotubes with a closed cap structure at one end thereof; and
radical scavenger particles positioned inside a cap of the closed cap structure.

2. The radical scavenger composite of claim 1, wherein the carbon nanotube is a single-walled carbon nanotube or multi-walled carbon nanotube.

3. The radical scavenger composite of claim 1, wherein the carbon nanotube has a length of 0.3 µm to 10 µm and a diameter of 100 nm or less.

4. The radical scavenger composite of claim 1, wherein the radical scavenger particle has a diameter of 3 nm to 100 nm.

5. The radical scavenger composite of claim 1, wherein the radical scavenger particles positioned inside a cap are contained 55 wt% to 95 wt% based on the total weight of the total radical scavenger composite particles.

6. The radical scavenger composite of claim 1, wherein the radical scavenger composite is used for an electrode in a membrane electrode assembly for a fuel cell.

7. A method for preparing a radical scavenger composite comprising:
providing radical scavenger particles on the surface of a substrate; and
growing carbon nanotubes (CNTs) on the surface of the radical scavenger particles.

8. The method of claim 7, wherein the providing radical scavenger particles on the surface of the substrate comprises applying a solution containing the radical scavenger particles on the surface of the substrate.

9. The method of claim 7, wherein the growing carbon nanotubes on the surface of the radical scavenger particles is performed by a tip growth method.

10. The method of claim 7, wherein the growing carbon nanotubes on the surface of the radical scavenger particles comprises:
subjecting the substrate, which is provided on the surface thereof with the radical scavenger particles, to a first heat treatment; and
subjecting the substrate, which has been subjected to the first heat treatment, to a second heat treatment at a temperature higher than that of the first heat treatment temperature while supplying a carbon nanotube precursor thereto.

11. The method of claim 10, wherein the first heat treatment is performed at a temperature of 200°C to 400°C in an inert gas atmosphere and the second heat treatment step is performed at a temperature of 500°C to 1,100°C in a mixed gas atmosphere of hydrogen and an inert gas.

12. The method of claim 10, wherein the carbon nanotube precursor is at least one selected from the group consisting of ethylene, acetylene, methylacetylene, vinylacetylene, alcohol, phthalocyanine, porphyrin, melamine, cyanamide, and dicyandiamide.

13. The method of claim 10, wherein the carbon nanotube precursor is at least one selected from the group consisting of ethylene, acetylene, methylacetylene, vinylacetylene, and alcohol and is provided to the second heat treatment in a gaseous state.

14. The method of claim 10, wherein the carbon nanotube precursor is at least one selected from the group consisting of phthalocyanine, porphyrin, melamine, cyanamide, and dicyandiamide, and
wherein the carbon nanotube precursor is provided to a zone where the substrate is positioned for the second heat treatment by heating and vaporizing in a second zone spaced apart from the zone where the substrate is positioned.

15. The method of claim 7, wherein the substrate is any one selected from the group consisting of a copper (Cu) substrate, an iron (Fe) substrate, a nickel (Ni) substrate, and a silicon (Si) substrate.

16. A membrane-electrode assembly comprising the radical scavenger composite according to claim 1.

17. A fuel cell comprising the membrane-electrode assembly according to claim 16.
